# EUROPÄISCHE PATENTANMELDUNG

(11) **EP 1 503 571 A2**
(43) Veröffentlichungstag der Anmeldung: **02.02.2005**
(21) Anmeldenummer: 04016395.8
(22) Anmeldetag: 13.07.2004
(51) Int. Cl.: H04N 1/04

(54) **Vorrichtung zum Scannen eines aufgeschlagenen Buches**

(30) Priorität: 31.07.2003 DE 10335052
(71) Anmelder: infosys GmbH, 22549 Hamburg (DE)
(72) Erfinder: Mahnke, Rainer, 22880 Wedel (DE); Harms, Werner, 28876 Oyten/Bassen (DE); Steingraber, Helmut, 83122 Samerberg (DE)
(74) Vertreter: Patentanwälte Hauck, Graalfs, Wehnert, Döring, Siemons, Schildberg

(57) **Zusammenfassung**

Vorrichtung zum Scannen eines aufgeschlagenen Buches, mit
- mindestens einem Lesekopf, der mindestens einen lichtempfindlichen Sensor und eine Optik besitzt,
- einem Ablagebereich für das abzubildende Buch, auf den der Lesekopf gerichtet ist, und
- einer Steuereinrichtung zum Auslesen von Daten aus dem Sensor,
- wobei die Optik jede Buchseite unter einem Neigungswinkel auf den Sensor abbildet, wobei der Neigungswinkel mit einer normalen Richtung des Ablagenbereichs einen spitzen Winkel einschließt und zu einer Flächennormalen der Buchseite im Falzbereich hin geneigt ist,
dadurch gekennzeichnet, daß
- Optik und Sensor derart stationär zueinander angeordnet sind, daß durch diese Anordnung jeweils die gesamte Buchseite vom Falzbereich bis zum Seitenrand auf den Sensor scharf abgebildet ist.

## Beschreibung

Die vorliegende Erfindung betrifft eine Vorrichtung zum Scannen eines aufgeschlagenen Buches. Solche Vorrichtungen werden insbesondere zur Digitalisierung von gedruckten Büchern eingesetzt, bei denen die eingescannte Buchseite nachfolgend digital gespeichert wird. Auch werden die eingescannten Buchseiten beispielsweise durch eine Schrifterkennungssoftware (OCR = optical character recognition) gelesen, um so nicht nur ein gescanntes Bild des Buches, sondern auch den gedruckten Text digital zur Verfügung zu haben.

Aus US 5,978,102 ist ein solcher Buchscanner bekannt, bei dem das aufgeschlagene Buch mit zwei Buchseiten auf einen optischen Sensor abgebildet wird. Der als sensor ausgebildete Sensor wird in seiner sogenannten Subscan-Richtung ausgelesen, die quer zu dem Buchfalz, also entlang der gedruckten Zeilen verläuft. Da die abzutastenden Buchseiten unterschiedlich nahe zu dem Objektiv mit seinem Sensor verlaufen, wird beispielsweise in einem dem Scanvorgang vorgeschalteten Durchlauf der Abstand von Buchseite und Sensor gemessen. Die gewonnenen Daten werden zur Fokussierung der Buchseite eingesetzt.

Aus DE 101 33 747 ist ein Kopiergerät bekannt, daß die Schärfe beim Abtasten eines aufgeschlagenen Buches nachführt. Hierbei kann während des Durchlaufs die Höhe des Buches entlang einer Randkante gemessen werden. Während des Scanvorgangs wird die aufgrund der Wölbung der Buchseite entstehende Unschärfe ausgeglichen, indem anhand von gemessenen Daten die Schärfe nachgeführt wird. Hierdurch kann auch in den Buchfalzbereich hinein die gedruckte Schrift scharf abgebildet werden.

Aus JP 10-336393 A ist ein Lesegerät bekannt, bei dem der Lesekopf aus einer Mittelsenkrechten über dem Buchfalz herausgeschwenkt und schräg auf die einzelnen Buchseiten gerichtet werden kann, um so "tiefer" in den Bereich des Buchfalzes zu schauen. Hierbei erfolgt die Schärfeeinstellung über einen schräg an die Buchkante angelegten Spiegel, über dessen Reflexion die Höhe der Buchseite bestimmt werden kann. Eine genaue Bestimmung der Buchhöhe und eine exakte Nachführung der Schärfe ist bei diesem Buchscanner von besonderer Bedeutung, da durch die schräge Betrachtung der Buchseite der Seitenrand wesentlich weiter von dem Sensor entfernt ist als der Buchfalz und so Verzerrungen und Unschärfe entstehen.

Der vorliegenden Erfindung liegt die Aufgabe zugrunde, eine Vorrichtung zum Scannen eines aufgeschlagenen Buches bereitzustellen, die mit einfachen Mitteln eine scharfe Abbildung der zu scannenden Buchseiten liefert.

Erfindungsgemäß wird die Aufgabe durch eine Vorrichtung zum Scannen mit den Merkmalen aus Anspruch 1 gelöst. Vorteilhafte Ausgestaltungen dieser Vorrichtung bilden den Gegenstand der Unteransprüche.

Die erfindungsgemäße Vorrichtung besitzt mindestens einen Lesekopf, der mindestens einen lichtempfindlichen Sensor und eine Optik besitzt. Ferner besitzt die Vorrichtung einen Ablagebereich für das zu scannende Buch, auf den der Lesekopf gerichtet ist. Ferner weist die Vorrichtung eine Steuereinrichtung zum Auslesen von Daten aus dem Sensor auf. Die Optik bildet jede Buchseite unter einem Neigungswinkel auf dem Sensor ab. Der Neigungswinkel der optischen Achse des Lesekopfs schließt mit einer Normalenrichtung des Ablagebereichs einen spitzen Winkel ein und ist zu einer Flächennormale der Buchseite im Falzbereich hin geneigt. Es erfolgt also ein "Blick" schräg auf die Buchseite in den Falzbereich hinein. Erfindungsgemäß sind Optik und Sensor derart zueinander angeordnet, daß jeweils die gesamte Buchseite vom Falzbereich bis zum Seitenrand hin scharf auf den Sensor abgebildet wird. Bei der erfindungsgemäßen Scanvorrichtung entfällt der aufwendige Meßvorgang, die Buchhöhe zu erfassen und während des Scanvorgang eine Fokussierung der Optik nachzuführen. Es wird durch Anordnung von Optik und Sensor vielmehr erzielt, daß der gesamte Höhenbereich der abzubildenden Buchseite für eine nachgeschaltete OCR hinreichend scharf auf dem Sensor abgebildet ist.

Bei der schrägen Betrachtung der Buchseite entstehen optische Verzerrungen in der Abbildung, die gelegentlich auch als stürzende Linien bezeichnet werden. Beim zeilenweise gedruckten Buch verringert sich dabei der Durchschuß der Zeilen hin zum Seitenrand. Eine solche optische Verzerrung verfälscht die Abbildung der Buchseite und erschwert einer OCR-Software die Erkennung. Bei der erfindungsgemäßen Vorrichtung werden daher diese Verzerrungen optisch korrigiert. Eine elektronische Nachkorrektur der Abbildung ist zwar denkbar, jedoch erfolgt eine optische Korrektur über den Lesekopf. Zur optischen Korrektur der Verzerrung wird die Buchseite nur über einen Teil des Öffnungswinkels des Objektives auf dem Sensor abgebildet.

In einer bevorzugten Ausgestaltung der erfindungsgemäßen Vorrichtung weist die Optik in dem Lesekopf zwei Spiegelsysteme auf, die jeweils auf eine Buchseite eines auf der Ablagefläche liegenden Buches gerichtet sind. Bevorzugt ist jedes Spiegelsystem jeweils auf eine Vorsatzlinse gerichtet, die die jeweilige Buchseite unter einer virtuellen Abstandsvergrößerung oder im Unendlichen abbildet. Diese Abbildung im vergrößerten Abstand oder im Unendlichen erzeugt einen Tiefenschärfebereich, der groß genug ist, um die gewölbte Buchseite über den gesamten Bereich scharf abzubilden. Bei dieser Ausgestaltung der erfindungsgemäßen Vorrichtung wird also durch eine Vorsatzlinse ein ausreichender Tiefenschärfebereich erzeugt, der eine Nachführung der Schärfe während des Scanvorgangs überflüssig macht. Bevorzugt bildet die Vorsatzlinse auf ein optisches Element ab, das die optische Achse der Abbildung derart umlenkt, daß die Umlenkung einer Parallelverschiebung zwischen Hauptobjektivebene und Bildebene entspricht. Diese Verschiebung bewirkt, daß nur über einen Teilbereich des Öffnungswinkels der Optik die Buchseite auf den Sensor abgebildet wird und so die durch den unterschiedlich langen optischen Weg erzeugten stürzenden Linien korrigiert werden.

Für das optische Element bieten sich Linsenkeile und/oder Drehkeilpaare an. Solche Linsenkeile besitzen die Eigenschaft, die optische Achse einer Abbildung umzulenken. Auch können Prismen zur Korrektur der Verzerrung eingesetzt werden.

Bei der bevorzugten Ausgestaltung der erfindungsgemäßen Vorrichtung wird jede Buchseite über das Spiegelsystem und das optische Element derart abgebildet, daß Bildebene und Objektivhauptebene zu einer Vorlagenebene für das Buch hin geneigt sind. Bevorzugt schneiden sich Bildebene, Objektivhauptebene und Vorlagenebene ungefähr in einem Punkt, wobei dieser Punkt auch im Unendlichen liegen kann. Eine solche Abbildung stellt sicher, daß die gesamte Buchseite mit einer ausreichenden Schärfe abgebildet werden kann.

In einer alternativen Ausgestaltung ist der Lesekopf der erfindungsgemäßen Vorrichtung mit zwei Sensoren ausgestattet, auf die über je eine Optik jeweils eine Buchseite von ihrem Falzbereich bis zum Seitenrand hin abgebildet wird. Bei dieser Ausgestaltung der erfindungsgemäßen Vorrichtung erfolgt die Korrektur der Verzerrung für jede Buchseite durch eine Parallelverschiebung von Bildebene des Sensors und Hauptobjektivebene der abbildenden Optik. Alternativ oder unterstützend kann die Korrektur der Verzerrung für jede Buchseite auch durch einen Keil oder ein Drehkeilpaar im Strahlengang erfolgen, der bzw. das die optische Achse umlenkt. Auch ist es möglich, die Korrektur der Verzerrung für jede Buchseite über ein Planlinsenpaar im Strahlengang vorzunehmen, das ebenfalls die optische Achse umlenkt. Durch das Umlenken der optischen Achse erfolgt die Abbildung der Buchseite auf den Sensor lediglich über einen Teil des Öffnungsbereich, so daß die stürzenden Linien auf der Buchseite vermindert werden.

Um bei der alternativen Ausgestaltung die gesamte zu erfassende Buchseite scharf abzubilden, werden Bildebene des Sensors und/oder Hauptobjektivebene der abbildenden Optik zur Vorlageebene hin geneigt. In einer bevorzugten Ausgestaltung schneiden sich Bildebene, Hauptobjektivebene und Vorlageebene annähernd in einem Punkt. Auch ist es denkbar, durch Vorsatzlinsen alternativ oder zusätzlich die Buchseite im Unendlichen abzubilden und so den Tiefenschärfebereich ausreichend zu vergrößern.

Ausgestaltungen der erfindungsgemäßen Vorrichtung werden nachfolgend anhand der Zeichnungen näher erläutert.

Es zeigt:
- Fig. 1: eine schematische Ansicht des Strahlengangs eines Buchscanners mit einem Lesekopf.
- Fig. 2: die Geometrie einer aufgeschlagenen Buchseite,
- Fig. 3: zeigt die bei der Perspektive aus Fig. 2 auftretenden stürzenden Linien zum Seitenrand hin,
- Fig. 4: zeigt die perspektivische Verzerrung bei einer schrägen Betrachtung der Buchseite und deren Korrektur,
- Fign. 5 und 6: die stürzenden Linien auf der senkrecht von oben abgebildeten Buchseite,
- Fig. 7: zeigt die Korrektur durch einen Parallelversatz des Sensors,
- Fig. 8: zeigt Linsen zur Umlenkung der optischen Achse,
- Fig. 9: zeigt den erforderlichen Tiefenschärfenbereich bei einer schrägen Abbildung der Buchseite,
- Fig. 10: zeigt den Tiefenschärfenbereich bei einer Neigung von Bildebene und Hauptobjektivebene zur Vorlageebene hin,
- Fig. 11: zeigt die Aufteilung der Bildebene bei schräger Abbildung für eine aufgeschlagene Buchseite,
- Fig. 12: zeigt den Strahlengang bei der Verwendung von zwei Sensorelementen in dem Scankopf mit einer Vorsatzlinse und verschobenem Sensor,
- Fig. 13: zeigt den Strahlengang für zwei Sensoren in dem Scankopf bei der Verwendung eines Linsenkeils und Neigung von Bildebene und Objektivebene,
- Fig. 14: zeigt den schematischen Aufbau eines Buchscanners mit Beleuchtung und Stativ und
- Fig. 15: zeigt Subscan-Richtung und Mainscan-Richtung für einen Lesekopf mit zwei Sensorelementen.

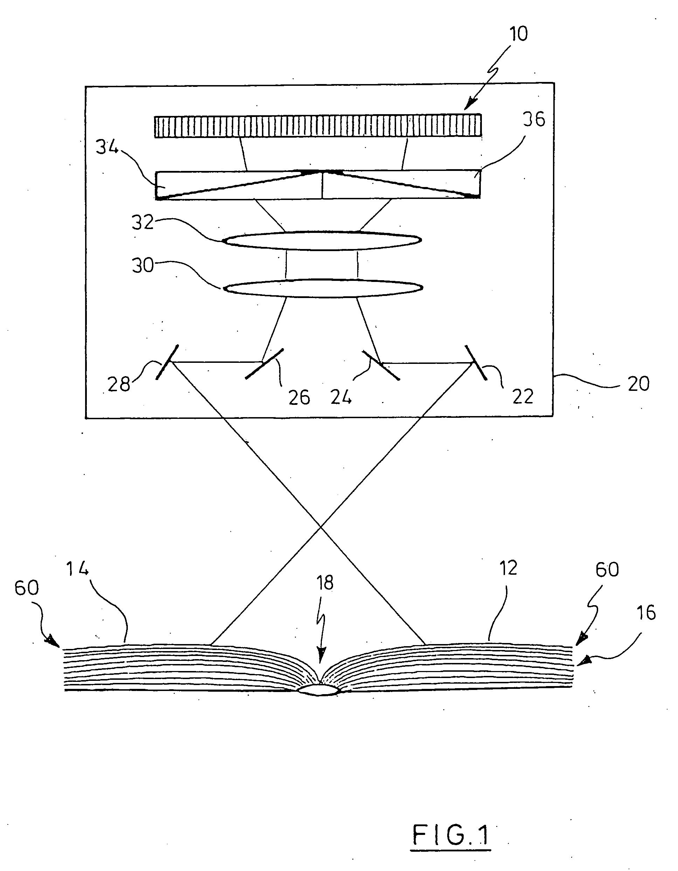

Fig. 1 zeigt schematisch den Strahlengang für einen Buchscanner mit einem lichtempfindlichen Sensor 10, auf den beide Buchseiten 12 und 14 abgebildet werden. Das Buch 16 liegt flach aufgeschlagen, wodurch sich im Falzbereich 18 eine Seitenkrümmung hin zum Buchrücken ergibt. Das Buch 16 kann ebenfalls auf einer eigens dafür vorgesehenen Buchwippe liegen, die eine Höhenanpassung der aufgeschlagenen Buchseiten erlaubt. Derartige Buchwippen und ihr Einsatz beim Scannen von Büchern sind bekannt. Auch ist es denkbar, durch das Auflegen einer Glasscheibe auf die Buchseiten 12 und 14 die Krümmung der Buchseiten zu reduzieren. Jedoch hat sich herausgestellt, daß hierdurch sowohl die Seiten als auch die Bindung des Buchs belastet werden, was gerade bei älteren Büchern zu vermeiden ist.

Der Scankopf 20 besitzt zwei Paare von jeweils aufeinander ausgerichteten Spiegeln 22 bis 28. Bezogen auf die Darstellung in Fig. 1 ist das rechte Spiegelpaar 22, 24 auf die linke Buchseite 14 gerichtet. Das linke Spiegelpaar 26, 28 ist dagegen auf die rechte Buchseite 12 gerichtet, so daß die eingezeichneten Strahlen sich kreuzen. Durch die Spiegelanordnung ist es möglich, schräg auf die Buchseiten zu blicken und unter einem flachen Winkel den steilen Buchfalzbereich 18 abzubilden.

Beide Spiegelpaare 22, 24 und 26, 28 sind auf eine Vorsatzlinse 30 gerichtet. Die Vorsatzlinse 30 kann auch in das abbildende Objektiv 32 integriert sein. Die Vorsatzlinse 30 bildet die Buchseiten 12 und 14 jeweils ins Unendliche ab, d.h. die aus den Spiegelpaaren kommenden Strahlen werden als annähernd paralleles Strahlenbündel auf das Objektiv 32 abgebildet.

Das Objektiv 32 bildet über zwei Prismenteile 34 und 36 die Buchseite jeweils ortsrichtig auf den Sensor 10 ab. Bei dem Sensor 10 kann es sich um einen CCD-Zeilensensor handeln, der von einer nicht dargestellten Ausleseelektronik ausgelesen wird und digitalisierte Bilder der Buchseiten 12 und 14 erzeugt.

Fig. 1 ist bereits zu entnehmen, daß für den einmal justierten Scankopf keine Fokussierung auf die Buchseiten 12 und 14 erfolgen muß, während die Buchseiten abgetastet werden. Dies wird durch den Aufbau des Scankopfs und seine optischen Elemente, insbesondere die Vorsatzlinse erzielt, wie nachfolgend anhand der Verzerrungen und der Schärfe näher erläutert wird.

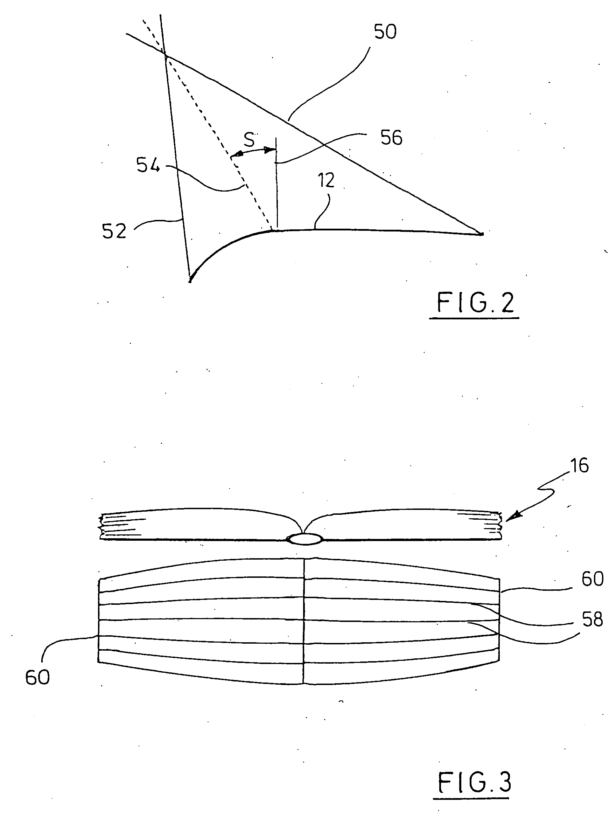

Fig. 2 zeigt schematisch den Strahlengang für die Buchseite 12. Um die Buchseite vollständig zu erfassen, werden die Randstrahlen 50 und 52 über eine in Fig. 2 nicht dargestellte Optik abgebildet. Der gestrichelt eingezeichnete Mittelstrahl 54 trifft schräg unter einem Winkel S zu einer Normalenrichtung 56 im Auflagenbereich auf. Anders als bei herkömmlichen Fotokopierem, bei denen das Buch flach auf eine Glasscheibe gelegt wird, ist hier die Betrachtungsrichtung 54 aus der Normalenrichtung in den Bereich des Buchfalzes geneigt.

Fig. 3 zeigt die bei dieser Betrachtungsweise entstehende Abbildung eines aufgeschlagenen Buchs. Im oberen Teil der Abbildung 3 ist das aufgeschlagene Buch von der Seite dargestellt, während im unteren Teil die gewonnene Abbildung des Buchs bei der in Fig. 2 dargestellten schrägen Betrachtung gezeigt ist. Auf den Buchseiten eingezeichnete Hilfslinien 58 laufen zu den Seitenrändern 60 hin zusammen. Diese Verzerrung wird auch als "stürzende Linien" bezeichnet. Die stürzenden Linien 58 verschlechtern deutlich die Abbildungsqualität und erschweren ein Lesen der abgebildeten Buchseite durch eine nachgeschaltete OCR.

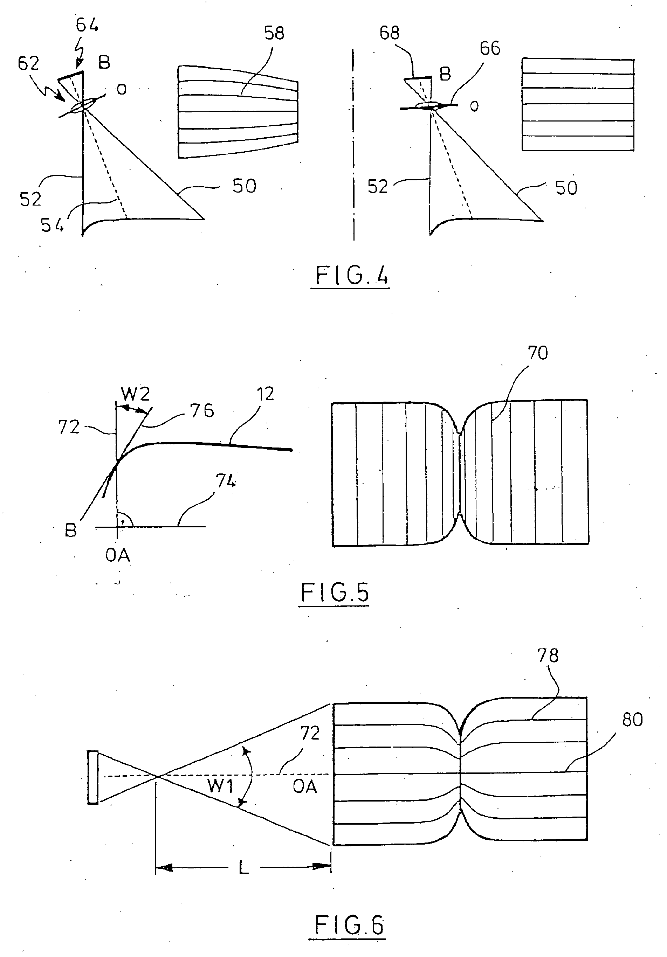

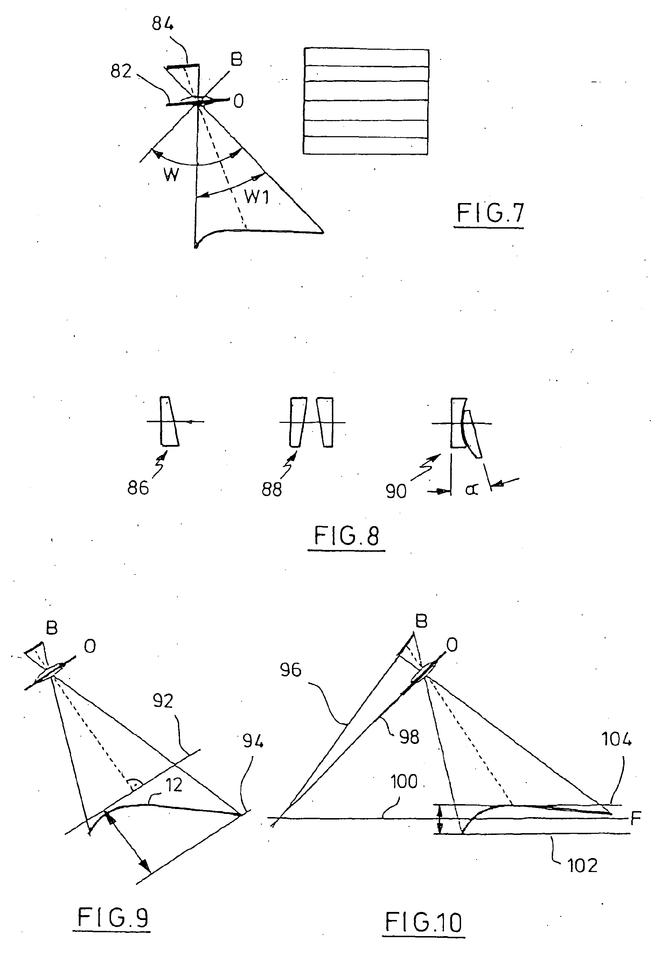

Fig. 4 verdeutlicht die in Fig. 2 eingezeichneten Strahlen 50, 52 und 54 mit einer herkömmlich ausgerichteten Optik 62 und einem Sensor 64. Durch die unterschiedliche Wegstrecke der Randstrahlen 50 und 52 treten die zum Seitenrand hin stürzenden Linien 58 auf. Während der linke Teil von Fig. 4 zeigt, wie ein herkömmlicher Scankopf bei einer geneigten Betrachtungsweise die Buchseite abbildet, zeigt der rechte Teil von Fig. 4 die erfindungsgemäße Abbildung der Buchseite. Durch die geänderte Anordnung von Sensor 68 und Optik 66, die nachfolgend mit Bezug auf Fig. 7 noch im Detail erläutert wird, wird erreicht, daß die unterschiedliche Weglänge der optischen Randstrahlen 52 und 50 ausgeglichen und die Abbildung der Buchseite trotz einer schrägen Betrachtung entzerrt wird.

Die auftretende Verzerrung der Buchseiten wird in bezug auf die Figuren 5 und 6 erläutert. Fig. 5 zeigt die Abbildung von zwei Buchseiten mit parallel zum Falzbereich verlaufenden Hilfslinien 70. Wie in Fig. 5 dargestellt, verringert sich der Abstand zwischen den Hilfslinien 70 im Falzbereich, bei einer Betrachtung der Buchseite bei der die optische Achse 72 senkrecht auf der Auflagefläche 74 steht. Die Verdichtung der Hilfslinien 70 erfolgt, da eine Tangente 76 an die Buchseite 12 im Falzbereich einen spitzen Winkel W2 mit der optischen Achse einschließt. Je spitzer der Winkel W2, um so stärker die Verzerrung. Wie in Fig. 2 dargestellt, wird bei der schrägen Betrachtung im Falzbereich der Winkel zwischen optischer Achse und Tangente an den Falzbereich vergrößert, so daß der Abstand zwischen den eingezeichneten Hilfslinien 70 sich nicht in dem Maße verringert.

Fig. 6 verdeutlicht eine Abbildungsweise aus dem Stand der Technik, bei der, wie in Fig. 6, die optische Achse 72 senkrecht auf der Ablagefläche 74 steht. Zusätzlich wird angenommen, daß die optische Achse 72 in der Mitte der Buchseite auf das aufgeschlagene Buch trifft. Deutlich zu erkennen in Fig. 6 ist, daß die quer zum Buchfalz verlaufenden Hilfslinien 78 in den Bereich des Buchfalzes geneigt sind. Lediglich die Hilfslinie 80, die von dem optischen Sensor unter einem Winkel von 0° abgebildet wird, verläuft gerade. Je weiter die Hilfslinie 78 von der 0°-Hilfslinie entfernt ist, um so stärker stürzen die Linien im Bereich des Buchfalzes.

Fig. 7 zeigt am Beispiel einer Optik 82, die auf einen Sensor 84 abbildet, wie die Entzerrung der Abbildung erreicht wird. Die Entzerrung wird durch eine Parallelverschiebung des Sensorelements bewirkt. Bei der Parallelverschiebung in der Bildebene wird nicht länger über den gesamten Öffnungsbereich W der Sensor 84 beleuchtet, sondern lediglich ein reduzierter Öffnungswinkel W1 wird über die Optik 82 abgebildet. Hierdurch wird das Bild weitgehend entzerrt.

Gleichwirkend mit einer Parallelverschiebung, bei der der Sensor parallel gegenüber der Optik verschoben wird, um lediglich von einem Teil des Öffnungswinkels belichtet zu werden, kann auch durch Linsenelemente ein Umlenken der optischen Achse erfolgen. Bei der umgelenkten optischen Achse wird dann ebenfalls nur noch ein Teil des Öffnungswinkels auf den Sensor abgebildet. Fig. 8 zeigt einen Linsenkeil 86, der auch als Prisma angesehen werden kann. Durch die Hintereinanderanordnung von zwei Linsenkeilen 88 kann durch eine Drehung eine variable Umlenkung eingestellt werden. Ein Planlinsenpaar 90 erlaubt durch seinen Schwenkwinkel α ebenfalls eine einstellbare Umlenkung der optischen Hauptachse.

Fig. 9 verdeutlicht die bei der schrägen Betrachtung einer Buchseite auftretende Schärfenproblematik. Der Tiefenschärfebereich ist in Fig. 9 durch die Hilfslinien 92 und 94 dargestellt. Um die gesamte Buchseite 12 scharf bei einer schrägen Betrachtung abbilden zu können, ist der dargestellte Tiefenschärfebereich erforderlich, der sich vom Falzbereich der Buchseite 12 bis zum Seitenrand erstreckt. Ein solcher Tiefenschärfebereich läßt sich mit einer günstigen Optik nicht erzielen.

Fig. 10 zeigt, wie bei dem erfindungsgemäßen Buchscanner die Bildebene 96 und die Objektivebene 98 sich gemeinsam in einer Fokusebene 100 schneiden. Durch den gemeinsamen Schnittpunkt der Ebenen 96, 98 und 100 entsteht ein zur Ablagefläche paralleler Tiefenschärfebereich, der durch die eingezeichneten Hilfslinien 102 und 104 begrenzt wird. Wie aus dem Vergleich mit Fig. 9 ersichtlich, ist dieser Tiefenschärfebereich deutlich kleiner als der erforderliche Tiefenschärfebereich aus dem Stand der Technik und kann mit vergleichsweise einfachen Optiken bereits erzielt werden. Hinzu kommt, daß der Tiefenschärfebereich bereits die gesamte Buchseite umfaßt, so daß keine automatische Fokussierung oder Nachführung der Fokussierung erforderlich ist.

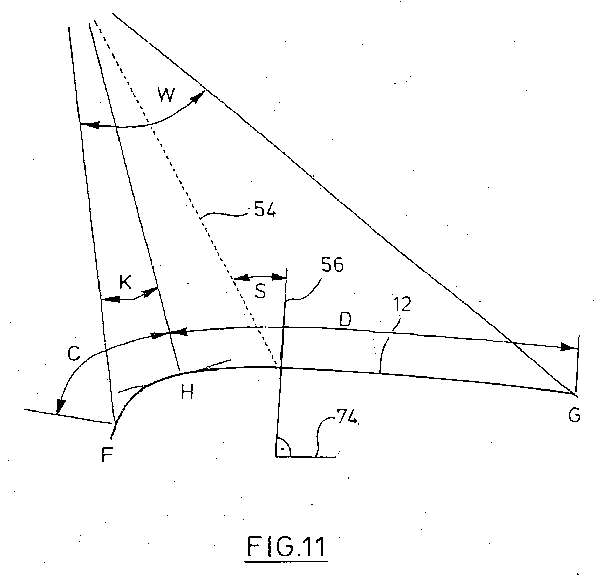

Die optischen Abbildungszusammenhänge sind zusammenfassend in Fig. 11 dargestellt:

Eine Buchseite 12 wird über eine Optik abgebildet, deren optische Achse 54 eine Normale 56 auf dem Auflagenbereich 74 unter einem Winkel S schneidet. Die optische Achse 54 ist dabei zum Buchfalz geneigt. Der Buchfalzbereich F wird unter einem Winkel K abgebildet, der klein ist. Es sei H der Punkt, in dem die Krümmung der Buchseite 12 wesentlich von der Flächennormalen abweicht und der kritische Buchfalzbereich beginnt.

Die Strecke C wird über einen kleinen Öffnungswinkel K abgebildet, wodurch stürzende Linien in diesem Bereich gering gehalten werden. Indem zusätzlich noch der Sensor entlang dem Buchfalz verfahren wird, kann der gesamte Bereich C unter dem kleinen Öffnungswinkel K abgetastet werden. Die Strecke D füllt den größeren Teil des Öffnungswinkels und verursacht durch den Betrachtungswinkel S die stürzenden Linien zum Seitenrand G hin. Diese stürzenden Linien werden durch den in den Figuren 8 und 9 dargestellten Shift von Objektiv und Sensor und/oder das Einführen eines optischen Elements in den Strahlengang ausgeglichen. In Fig. 11 ist nicht dargestellt, der Tiefenschärfebereich der Abbildung, der so gelegt ist, daß die Grenze für die Tiefenschärfe parallel zu der Auflagefläche 74 erfolgt und die gesamte Buchseite 12 sich innerhalb des Tiefenschärfebereichs befindet.

Vor dem Hintergrund der vorausgegangenen Erläuterung wird die Funktionsweise der optischen Anordnung in Fig. 1 besser verständlich. Der in Fig. 1 dargestellte Scankopf 20 erfaßt beide Buchseiten 12 und 14 unter einem schrägen Betrachtungswinkel. Die Spiegelpaare 22, 24 und 26, 28 lenken die Strahlen um. Durch die Vorsatzlinse 30 wird der Tiefenschärfebereich der abbildenden Optik 32, 34, 36 vergrößert. Die dargestellten Prismenelemente lenken die optische Achse derart um, daß die stürzenden Linien zur Vorlagenaußenkante korrigiert und ortsrichtig auf den Sensor 10 abgebildet werden. Die in Fig. 10 erläuterte Kippung und damit die Verstellung des Tiefenschärfebereichs ist bei der in Fig. 1 dargestellten Abbildung nicht unbedingt erforderlich, da durch die Vorsatzlinse 30 der Tiefenschärfebereich vergrößert wird.

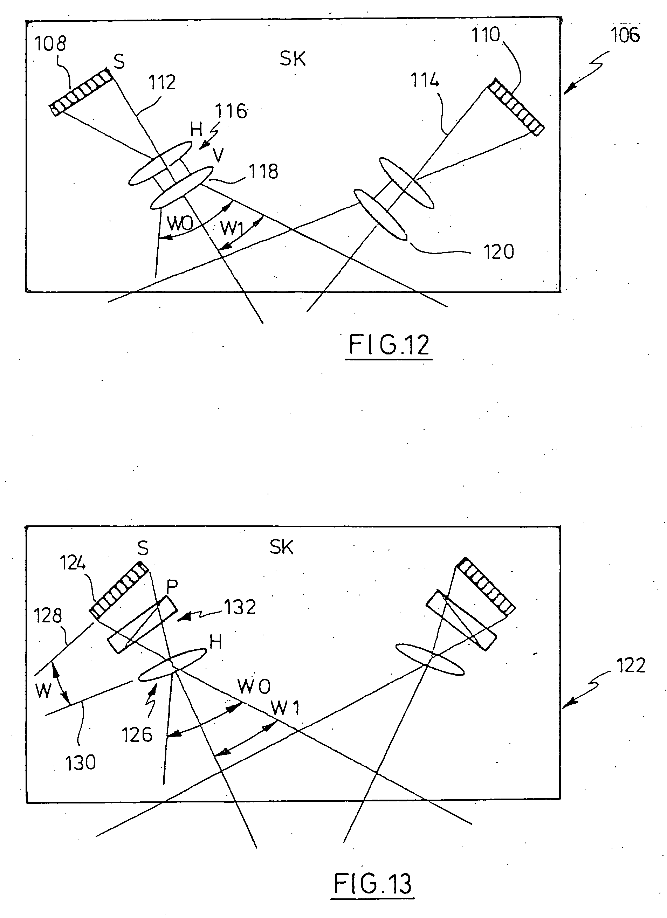

Fig. 12 zeigt einen Scankopf 106, der mit zwei Sensoren 108 und 110 ausgestattet ist. Bei diesem Scankopf wird durch eine Verschiebung der Sensoren 108 und 110 gegenüber den optischen Hauptachsen 112, 114 die Korrektur der stürzenden Linien vorgenommen. Hilfsweise ist W1 eingezeichnet, der die Verschiebung des Sensors 108 gegenüber der abbildenden Optik 116 verdeutlicht. Die Vorsatzlinsen 118 und 120 vergrößern den Tiefenschärfebereich ausreichend, so daß die gesamte abzubildende Buchseite scharf auf die Sensoren 108, 110 abgebildet wird.

Fig. 13 zeigt eine weitere Variante eines Scankopfs 122 bei dem die Einstellung der Tiefenschärfe durch das in Fig. 10 dargestellte Prinzip der Verkippung erfolgt. Hierzu sind die Bildebene 128 und die Objektivhauptebene 130 in einem Winkel W derart zueinander geneigt, daß sie die Vorlagefläche ungefähr in einem Punkt schneiden. In Scankopf 122 dargestellt ist ebenfalls ein Prismenkeil 132, der den Shift des Sensors 124 bewirkt und so die stürzenden Linien vermeidet. In Fig. 13 wird deutlich sichtbar, daß bei diesem Abbildungsansatz zwei Scanköpfe erforderlich sind und nicht eine Schwenkung eines einzigen Scankopfs ohne eine Neuausrichtung von Optik und Sensor ausreicht, um die zwei Seiten eines Buches abzubilden.

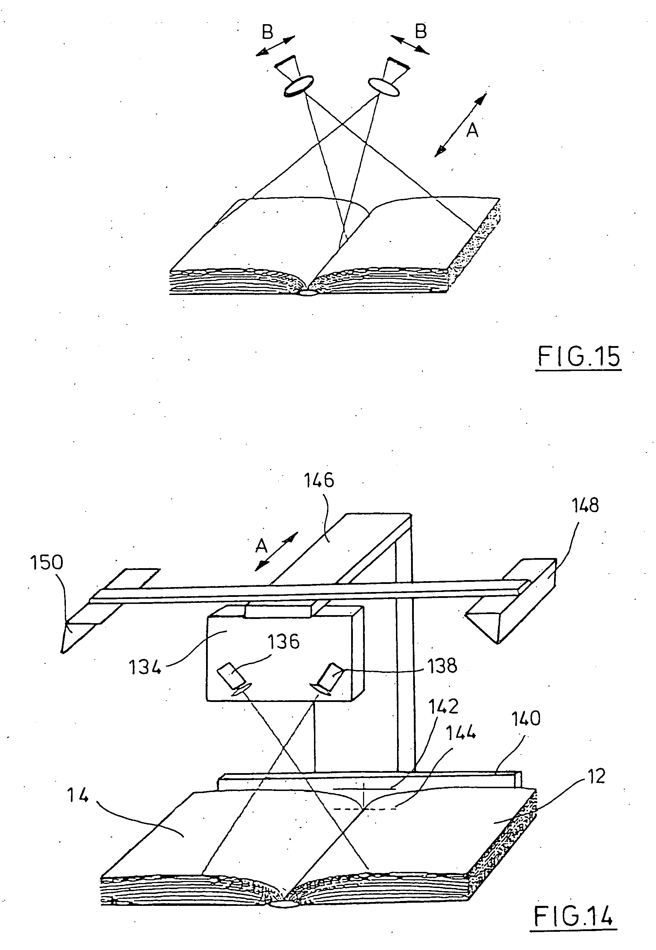

Fig. 14 zeigt den beispielhaften Aufbau für einen erfindungsgemäßen Buchscanner. In einem Scankopf 134 sind zwei optische Sensoren je auf eine Buchseite 12 und 14 gerichtet. Die Abbildung der Buchseiten 12 und 14 erfolgt scharf auf den Sensor. Der Tiefenschärfebereich des abbildenden Systems ist an einem Anlagebrett 140 durch die beiden Markierungen 142 und 144 eingezeichnet. Markierung 144 wird in der dargestellten Ansicht durch das Buch verdeckt und ist daher gestrichelt gezeichnet. Der Scankopf 134 wird an einem Stativarm 146 entlang der mit A bezeichneten Richtung verfahren. Beleuchtet werden die Buchseiten durch zwei Beleuchtungskörper, die für eine gute Ausleuchtung des Falzbereichs ebenfalls schräg in das Buch leuchten. Es ist aber auch denkbar, einen sich über die Buchbreite erstreckenden Leuchtkörper an dem Stativarm 146 vorzusehen, der beispielsweise mit dem Scankopf 134 verfahren wird. Die bei der erfindungsgemäßen Vorrichtung auftretenden Abtastrichtungen sind in Fig. 15 zur besseren Übersicht noch einmal dargestellt. Die als Zeilen-Sensoren ausgebildeten Sensoren werden in den durch die Pfeile B dargestellten Richtungen ausgelesen, was einem zeilenweise Auslesen des Buchs entspricht. Verfahren wird der Scankopf in Richtung A, wodurch bei einem aufgeschlagenen Buch im wesentlichen jede Zeile des Buchs gleich abgebildet wird.

Ein Scanzyklus erfolgt hierbei mit folgenden Schritten, nach einem Einschalten des Geräts und Starten der Applikationen zum Auslesen der Sensoren wird der Buchscanner mit Referenzdaten hinsichtlich Normierung, Gamma und Skalierungsmaske initialisiert. Auch Parameter zur Oberflächenkontur, Format und dergleichen können eingegeben oder erfaßt werden. Das Buch liegt aufgeschlagen auf einer nicht dargestellten Buchwippe und ist an der Anlagekante 140 innerhalb der Markierung 142 und 144 ausgerichtet. Eventuell muß das Buch an seinen Außenkanten fixiert werden, damit die einzelnen Seiten nicht unbeabsichtigt umschlagen oder sich aus dem Bereich der Schärfenmarkierungen 142, 144 erheben. Der Scanzyklus wird beispielsweise durch einen nicht dargestellten Fußschalter ausgelöst. Die Beleuchtung wird eingeschaltet und das vom Buch reflektierte Licht wird auf die beiden Kameras 136, 138 abgebildet. Der Scankopf 134 wird rechtwinklig zu der CCD-Zeilenausrichtung in seine Subscanning-Richtung A bewegt. Die CCD-Zeilen werden kontinuierlich in der Mainscanning-Richtung B ausgelesen. Die aus den Zeilen zusammengesetzte Abbildung ergibt jeweils eine Buchseite. Eine Normierung hinsichtlich von Weißgammut und Gamma und eine Skalierung der Bilddaten kann an den Buchaußenkanten in Echtzeit erfolgen. Die Bilddaten werden in einem internen Speicher der Steuerelektronik zwischengespeichert. Es ist kein Start/Stop-Betrieb in der Subscanning-Richtung erforderlich. Die Bilddaten werden über eine Schnittstelle zum Hostrechner übertragen, wo sie weiter verarbeitet werden.

## Patentansprüche

1. Vorrichtung zum Scannen eines aufgeschlagenen Buches, mit
- mindestens einem Lesekopf (20; 106; 122; 134), der mindestens einen lichtempfindlichen Sensor (10; 108, 110; 124) und eine Optik (30, 32, 36; 116, 118; 126, 132; 136, 138) besitzt,
- einem Ablagebereich für das abzubildende Buch (16), auf den der Lesekopf gerichtet ist, und
- einer Steuereinrichtung zum Auslesen von Daten aus dem Sensor,
- wobei die Optik jede Buchseite (12, 14) unter einem Neigungswinkel (S) auf den Sensor abbildet, wobei der Neigungswinkel mit einer normalen Richtung (56) des Ablagenbereichs einen spitzen Winkel einschließt und zu einer Flächennormalen der Buchseite im Falzbereich (18) hin geneigt ist,
**dadurch gekennzeichnet, daß**
- Optik und Sensor derart stationär zueinander angeordnet sind, daß durch diese Anordnung jeweils die gesamte Buchseite vom Falzbereich (18) bis zum Seitenrand (60) auf den Sensor scharf (102, 104) abgebildet ist.

2. Vorrichtung nach Anspruch 1, **dadurch gekennzeichnet, daß** bei der Abbildung der Buchseite die durch die geneigte Betrachtung hervorgerufene Verzerrung, insbesondere stürzende Linien optisch korrigiert werden.

3. Vorrichtung nach Anspruch 2, **dadurch gekennzeichnet, daß** jede Buchseite nur über einen Teil (W1) des Öffnungswinkels (W0) der Optik auf den Sensor abgebildet wird, um die hervorgerufene Verzerrung zu korrigieren.

4. Vorrichtung nach einem der Ansprüche 1 bis 3, **dadurch gekennzeichnet, daß** die Optik des Lesekopfs zwei Spiegelsysteme (22, 24, 26, 28) aufweist, die jeweils auf eine Buchseite eines auf der Ablagefläche liegenden Buches gerichtet sind.

5. Vorrichtung nach Anspruch 4, **dadurch gekennzeichnet, daß** jedes Spiegelsystem auf eine Vorsatzlinse (30) gerichtet ist, die die jeweilige Buchseite in einem virtuell vergrößerten Abstand oder im Unendlichen abbildet.

6. Vorrichtung nach Anspruch 5, **dadurch gekennzeichnet, daß** die Vorsatzlinse (30) auf ein optisches Element (34, 36) abbildet, das die optische Achse der Abbildung derart umlenkt, daß die Umlenkung einer Parallelverschiebung zwischen Objektivebene und Bildebene entspricht.

7. Vorrichtung nach Anspruch 6, **dadurch gekennzeichnet, daß** das optische Element einen Linsenkeil (86) und/oder zwei Drehkeilpaare (88) oder Kombinationen dieser aufweist.

8. Vorrichtung nach Anspruch 6, **dadurch gekennzeichnet, daß** das optische Element zwei Planlinsenpaare (90) besitzt.

9. Vorrichtung nach einem der Ansprüche 6 bis 8, **dadurch gekennzeichnet, daß** jede Buchseite über das Spiegelsystem und das optische Element abgebildet wird derart, daß Bildebene (128) und Objektivebene (130) zu einer Vorlageebene des Buches hin geneigt sind.

10. Vorrichtung nach Anspruch 9, **dadurch gekennzeichnet, daß** Bildebene (128), Objektivebene (130) und Vorlagenebene (100) des Buches sich ungefähr in einem Punkt schneiden.

11. Vorrichtung nach einem der Ansprüche 1 bis 3, **dadurch gekennzeichnet, daß** der Lesekopf zwei Sensoren aufweist, auf die über eine Optik jeweils eine Buchseite vom Falzbereich bis zum Seitenrand abgebildet wird.

12. Vorrichtung nach Anspruch 11, **dadurch gekennzeichnet, daß** die Korrektur der Verzerrung für jede Buchseite durch eine Parallelverschiebung von Bildebene des Sensors und Objektivebene der abbildenden Optik erfolgt.

13. Vorrichtung nach Anspruch 11, **dadurch gekennzeichnet, daß** die Korrektur der Verzerrung für jede Buchseite durch einen Linsenkeil (86) und/oder ein Drehkeilpaar (88) im Strahlengang erfolgt, der bzw. das die optische Achse umlenkt.

14. Vorrichtung nach Anspruch 11, **dadurch gekennzeichnet, daß** die Korrektur der Verzerrung für jede Buchseite über ein Planlinsenpaar (90) im Strahlengang erfolgt, das die optische Achse umlenkt.

15. Vorrichtung nach einem der Ansprüche 11 bis 14, **dadurch gekennzeichnet, daß** die Bildebene (128) des Sensors und die Hauptobjektivebene (130) der abbildenden Optik jeweils zur Vorlagenebene (100) hin geneigt sind.

16. Vorrichtung nach Anspruch 15, **dadurch gekennzeichnet, daß** die Bildebene jedes Sensors und die jeweilige Hauptobjektivebene sich jeweils in einem gemeinsamen Punkt mit der Vorlagenebene schneiden.
